# EUROPEAN PATENT SPECIFICATION

(11) **EP 4 621 637 B1**
(45) Date of publication and mention of the grant of the patent: **01.04.2026**
(21) Application number: 24194848.8
(22) Date of filing: 16.08.2024
(51) Int. Cl.: G06K 7/10, G06K 7/14

(54) **CAMERA PROVIDED IN LOGISTICS CONTROL SYSTEMS AND CAMERA CONTROL METHOD**
KAMERA IN LOGISTIKSTEUERUNGSSYSTEMEN UND KAMERASTEUERUNGSVERFAHREN
CAMÉRA FOURNIE DANS DES SYSTÈMES DE COMMANDE LOGISTIQUE ET PROCÉDÉ DE COMMANDE DE CAMÉRA

(30) Priority: 22.03.2024 KR 20240039580; 17.06.2024 KR 20240078472
(43) Date of publication of application: 24.09.2025
(73) Proprietor: Hanwha Vision Co., Ltd., Seongnam-si, Gyeonggi-do 13488 (KR)
(72) Inventor: Jung, Koo Il, 13488 Seongnam-si, Gyeonggi-do (KR); Lee, Jeong Seok, 13488 Seongnam-si, Gyeonggi-do (KR); Huh, Jin Wook, 13488 Seongnam-si, Gyeonggi-do (KR); Jeong, Joong Gyun, 13488 Seongnam-si, Gyeonggi-do (KR); Lee, Jong Hyeok, 13488 Seongnam-si, Gyeonggi-do (KR); Park, Jung Min, 13488 Seongnam-si, Gyeonggi-do (KR)
(74) Representative: Gulde & Partner

(56) References cited:
- CN-A- 110 874 699
- CN-A- 117 522 252
- US-A1- 2004 031 851
- US-A1- 2020 202 091
- US-A1- 2021 216 729

## Description

### BACKGROUND

### 1. Field

The disclosure relates to a camera provided in logistics control systems and a camera control method.

### 2. Description of the Related Art

A user may obtain barcode information about an article to check a distribution process of the article in a logistics system. Also, when a problem, such as loss of an article, occurs, the user may check a movement state of an article by directly searching barcode information about the article.

According to the related art, a user has difficulty in directly checking that a problem has occurred in a logistics process by checking barcode information, and has difficulty in directly searching and finding whether a problem article exists or the current location of an article.

According to the related art, there has been no image-based barcode recognition camera, and there is a problem in that image-based barcode readers are unable to distinguish between colors of articles or cargoes by using monochrome image sensor for recognition accuracy.

US 2004/0031851 A1 discloses an image capture system that uses a common, twodimensional imaging array to acquire both target images and optical code (e.g. barcode) images without requiring moving optical components. The system is designed to operate in both near-field (for barcode capture) and far-field (for object imaging) ranges by utilizing different sections of the same sensor array. This setup enables compact construction, suitable for portable use.

### SUMMARY

Provided is a camera provided in logistics control systems and a camera control method. However, these problems are illustrative, and the scope of the disclosure is not limited thereto.

Additional aspects will be set forth in part in the description which follows and, in part, will be apparent from the description, or may be learned by practice of the presented embodiments of the disclosure.

According to an aspect of the disclosure, a camera included in a logistics control system includes a barcode information obtaining module configured to capture an image of a barcode of an article, which is attached to the article, and obtain barcode information of the barcode, an image information obtaining module configured as one housing with the barcode information obtaining module and configured to obtain image information of the article by capturing an image of the article and be simultaneously triggered by one signal to have a synchronized photographing time point with the barcode information obtaining module, and a processor configured to monitor the article based on the barcode information and the image information.

The barcode information obtaining module and the image information obtaining module capture the article in a common field of view (FOV) area, and the common FOV area is formed as a common area of a first capturing area captured by the barcode information obtaining module and a second capturing area captured by the image information obtaining module.

The barcode information module and the image information obtaining module is included in one system-on-chip (SoC) to be simultaneously triggered by one signal to have synchronized photographing time points.

The barcode information obtaining module may include a liquid lens.

A horizontal or vertical width of the common FOV area may be equal to or greater than a width of a conveyor belt.

The barcode information obtaining module may include a monochrome sensor, the image information obtaining module may include a color sensor, and the image information obtaining module may obtain color information of the article.

The processor may be further configured to generate article status information by inserting the barcode information of the article into a metadata area related to the color information of the article and map the barcode information of the article with the color information of the article based on the article status information.

The processor may be further configured to check a status of the article or a position of the article based on the barcode information of the article and the color information of the article.

The camera may further include a light-emitting diode (LED) arranged on one side of the housing.

Other aspects, features, and advantages other than those described above will become clear from the detailed description, claims, and drawings for carrying out the disclosure below.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a diagram for explaining the configuration and operation of a logistics control system according to an embodiment;
FIG. 2 is a diagram for describing an example of a conceptual diagram of a logistics control system according to an embodiment;
FIG. 3 is a diagram for explaining a logistics control system according to an embodiment;
FIG. 4 is a diagram for explaining a logistics control system according to another embodiment;
FIG. 5 is a diagram for explaining the configuration of a server included in a logistics control system according to an embodiment;
FIGS. 6 is a diagram for describing an example of an internal block diagram of a camera according to an embodiment;
FIG. 7 is a diagram for describing an example of an internal block diagram of an image-capturing module according to an embodiment;
FIG. 8 is a diagram for describing an example of a focus feedback screen of a camera according to an embodiment;
FIG. 9 is a diagram for describing an example of a light-emitting diode (LED) setup screen of a camera according to an embodiment;
FIG. 10 is a diagram for describing an example of a sensor mode screen of a camera according to an embodiment;
FIG. 11 is a diagram for describing an example of a block diagram of an artificial intelligence (AI) device to which a method according to an embodiment may be applied;
FIG. 12 is a diagram for describing an example of an operating method of a barcode reader (BCR) open application for performing a method according to an embodiment;
FIG. 13 is a diagram for describing an example of a BCR platform structure according to an embodiment;
FIG. 14 is a flowchart illustrating a logistics control method according to an embodiment;
FIG. 15 is a flowchart illustrating an example of a method of performing logistics control, according to an embodiment;
FIG. 16 is a diagram for describing an example of a common field of view area of a camera according to an embodiment;
FIG. 17 is a diagram for describing an example of barcode information of an article according to an embodiment;
FIG. 18 is a flowchart illustrating another example of a method of performing logistics control, according to an embodiment; FIGS. 19 and 20 are diagrams for explaining a logistics control method according to an embodiment;
FIG. 21 is a diagram for describing an operation of a server of a logistics control system according to an embodiment; and
FIGS. 22 and 23 are diagrams for describing a logistics control method according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

The disclosure will now be described more fully with reference to the accompanying drawings, in which exemplary embodiments of the disclosure are shown. Effects and features of the disclosure, and methods for achieving the effects and features will become clear with reference to the embodiments to be described below in detail together with the drawings. The disclosure may, however, be embodied in many different forms and should not be construed as being limited to the exemplary embodiments set forth herein.

Hereinafter, the disclosure will be described in detail by explaining embodiments of the disclosure with reference to the attached drawings. Like reference numerals in the drawings denote like elements, and thus their description will be omitted.

In the following embodiments, terms as "first," "second," etc., may be used to describe various components, such components must not be limited to the above terms. The above terms are used only to distinguish one component from another. An expression used in the singular encompasses the expression of the plural, unless it has a clearly different meaning in the context. Also, it is to be understood that the terms such as "including," "having," and "comprising" are intended to indicate the existence of the features or components disclosed in the specification, and are not intended to preclude the possibility that one or more other features or components may be added.

Sizes of components in the drawings may be exaggerated for convenience of explanation. In other words, since sizes and thicknesses of components in the drawings are arbitrarily illustrated for convenience of explanation, the following embodiments are not limited thereto.

In the following embodiments, it will be understood that when a part, such as a region, a component, a unit, a block, or a module, is referred to as being "on" another part, the part can be directly on the other part or intervening regions, components, units, blocks, or modules may be present thereon. Also, when regions, components, units, blocks, or modules are referred to as being connected to each other, the regions, components, units, blocks, or modules can be directly connected to each other, or the regions, components, units, blocks, or modules can be indirectly connected with other regions, components, units, blocks, or modules therebetween.

Hereinafter, various embodiments of the disclosure will be described in detail with reference to the accompanying drawings so that those skilled in the art can easily practice the disclosure.

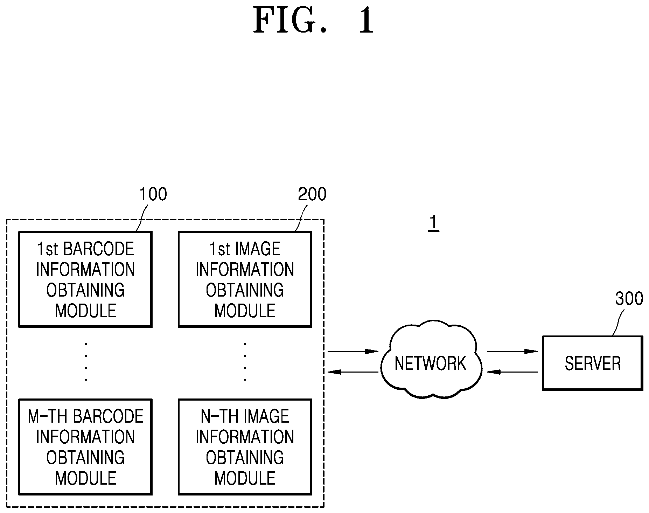

FIG. 1 is a diagram for explaining the configuration and operation of a logistics control system according to an embodiment.

Referring to FIG. 1, a logistics control system 1 according to an embodiment may include a barcode information obtaining module 100, an image information obtaining module 200, and a server 300. However, the disclosure is not limited thereto, and the logistics control system 1 may further include other components or some components may be omitted. Some components of the logistics control system 1 may be separated into a plurality of devices, or a plurality of components may be merged into one device.

The barcode information obtaining module 100 may be a device provided in the logistics control system 1 to obtain barcode information about an article. For example, a plurality of barcode information obtaining modules 100 may be provided at drop-off points and loading points in a plurality of terminals of the logistics control system 1. For example, the barcode information obtaining module 100 may be installed on each of drop-off and loading conveyors of the logistics control system 1 to obtain barcode information of an article, the barcode information being attached to an article.

The image information obtaining module 200 may be a device provided in the logistics control system 1 to obtain image information about an article. For example, a plurality of image information obtaining modules 200 may be provided at the drop-off points and the loading points in the plurality of terminals of the logistics control system 1. For example, the image information obtaining module 200 may be installed on each of the drop-off and loading conveyors of the logistics control system 1 to obtain image information about an article.

Also, a photographing time point of the image information obtaining module 200 may be synchronized with a photographing time point of the barcode information obtaining module 100. For example, a time point when the barcode information obtaining module 100 recognizes a barcode of an article may be synchronized with a time point when the image information obtaining module 200 captures an image of the same article. For example, at a time point when the barcode information obtaining module 100 obtains barcode information about an article, the image information obtaining module 200 may obtain image information about the same article at the same time point. Accordingly, the logistics control system 1 according to the disclosure may count articles based on images and barcode information instead of counting articles by using only barcode information.

The server 300 may be a server device that controls the operation of the logistics control system 1. For example, the server 300 may be connected to the barcode information obtaining module 100 and the image information obtaining module 200 through a network to exchange to exchange data with each other. For example, the server 300 may obtain barcode information about an article from the barcode information obtaining module 100. Also, the server 300 may obtain image information about an article from the image information obtaining module 200. In addition, the server 300 may monitor an article based on the barcode information and the image information about the article.

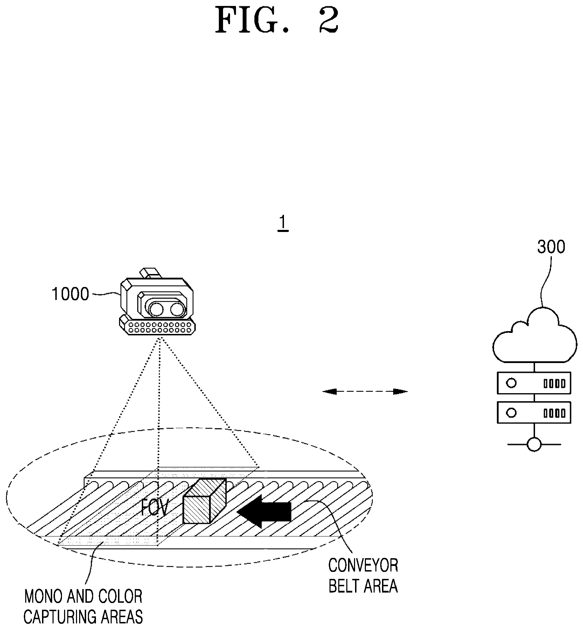

FIG. 2 is a diagram for describing an example of a conceptual diagram of a logistics control system according to an embodiment.

The components shown in FIG. 2 are not essential for implementing a logistics control system (or a logistics monitoring system), so the logistics control system described in the disclosure may include more or fewer components than those listed above.

Referring to FIG. 2, the logistics control system 1 may include a camera 1000 and a server 300.

The logistics control system 1 may capture an image of an article moving through a logistics conveyor belt with the camera 1000 including a monochrome sensor and a color sensor. For example, the logistics control system 1 may obtain barcode information of the article with the monochrome sensor and obtain color information of the article with the color sensor to analyze the obtained barcode information of the article and the obtained color information of the article to check the status of the article. In addition, the logistics control system 1 may transmit an analysis result to the server 300 to store and manage the analysis result by the server 300 to check whether the article is damaged or stolen, and may obtain metadata about characteristic points such as the size, volume, and pattern of the article.

The camera 1000 and the server 300 may transmit and receive signals or information wired and/or wirelessly through a network.

The camera 1000 is a device that may implement a method of performing logistics control or logistics monitoring proposed in the disclosure, which may include a barcode reader (BCR) camera, a surveillance camera (or CCTV), an edge device, an artificial intelligence (AI) camera, a network camera, or the like, but a BCR camera is described as an example in the disclosure. However, the disclosure is not limited thereto.

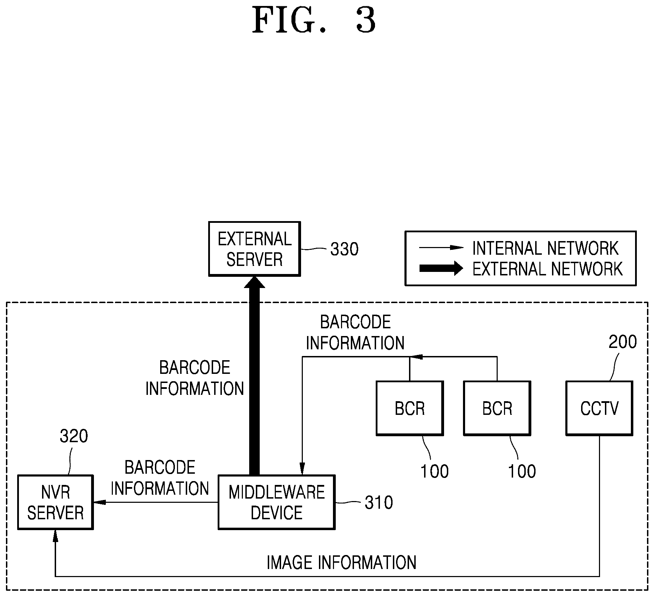

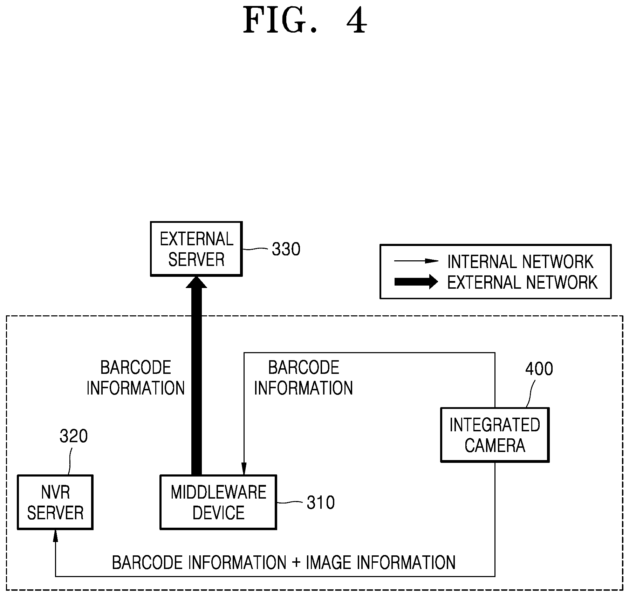

FIG. 3 is a diagram for describing a logistics control system according to an embodiment. In addition, FIG. 4 is a diagram for describing a logistics control system according to another embodiment.

First, referring to FIG. 3, the logistics control system according to an embodiment may include the barcode information obtaining module 100, the image information obtaining module 200, a middleware device 310, a network video recorder (NVR) server 320, and an external server 330. For example, the barcode information obtaining module 100 may include a barcode reader (BCR) camera. Here, the BCR camera may obtain barcode information. For example, the image information obtaining module 200 may include a closed-circuit television (CCTV). Here, the CCTV may obtain image information. Also, referring to FIG. 4, the logistics control system according to an embodiment may include an integrated camera 400. For example, the integrated camera 400 may be a device configured to perform functions barcode information obtaining module 100 and the image information obtaining module 200 in one device. For example, the integrated camera 400 may obtain both barcode information and image information. The NVR server 320 according to an embodiment may obtain barcode information and image information by synchronizing the same. For example, the NVR server 320 may store data by tagging based on the time when data is received into the NVR server 320. For example, as shown in FIG. 3, the NVR server 320 may obtain barcode information by tagging time information to the barcode information, based on a time point at which the barcode information is obtained from the middleware device 310. Also, the NVR server 320 may obtain image information by tagging time information to the image information, based on a time point at which the image information is obtained from the CCTV 200. The NVR server 320 may obtain the barcode information and the image information by synchronizing the same, based on the time information tagged to the barcode information and the time information tagged to the image information.

Also, the NVR server 320 may search for an article based on the barcode information. For example, the NVR server 320 may search for image information synchronized with the barcode information, based on the barcode information. In addition, the NVR server 320 may identify an article through the image information synchronized with the barcode information.

The integrated camera 400 according to an embodiment may have a first channel for transmitting barcode information and a second channel for transmitting barcode information and image information. For example, as shown in FIG. 4, the integrated camera 400 may transmit barcode information to the middleware device 310 through the first channel, according to a request received from the middleware device 310. Also, the integrated camera 400 may transmit barcode information and image information to the NVR server 320 through the second channel, according to a request received from the NVR server 320.

The logistics control system according to an embodiment may include a network consisting of a closed circuit network and an external network. For example, referring to FIGS. 3 and 4, according to an embodiment, the closed circuit network (e.g., an internal network) may be configured between the BCR camera 100-the middleware device 310-the NVR server 320-the CCTV 200 and between the middleware device 310-the integrated camera 400-the NVR server 320. Also, the external network may be configured between the middleware device 310 and the external server 330.

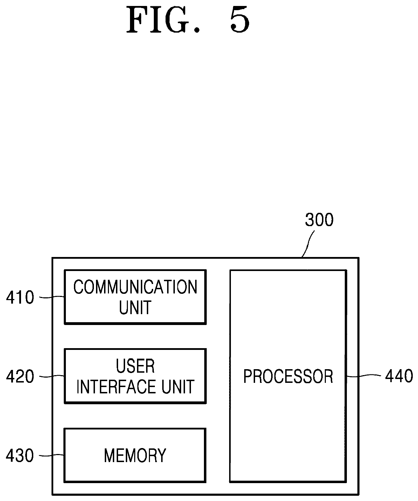

FIG. 5 is a diagram for explaining the configuration of a server included in a logistics control system according to an embodiment.

Referring to FIG. 5, the server 300 according to an embodiment may include a communication unit 310, a user interface unit 320, a memory 330, and a processor 340.

The communication unit 310 may provide a function for communicating with an external device through a network. For example, a request generated, by the processor 340 of the server 300, according to program code stored in a recording device, such as the memory 330, may be transmitted to an external device through a network under the control of the communication unit 310. Conversely, a control signal, command, content, file, or the like provided from the external device may be received by the server 300 through the communication unit 310 via the network. For example, a control signal, command, or the like of the external device received through the communication unit 310 may be transmitted to the processor 340 or the memory 330.

A communication method is not limited, and may include short-distance wireless communication between devices as well as a communication method utilizing a communication network (e.g., a mobile communication network, wired Internet, wireless Internet, broadcasting network) that the network may include. For example, the network may include any one or more of networks, such as personal area network (PAN), local area network (LAN), campus area network (CAN), metropolitan area network (MAN), wide area network (WAN), broadband network (BBN), the Internet, or the like. Also, the network may include any one or more of network topologies including, but not limited to, a bus network, a star network, a ring network, a mesh network, a star-bus network, a tree or hierarchical network, or the like.

In addition, the communication unit 310 may communicate with an external server through a network. A communication method is not limited, but the network may be a short-distance wireless communication network. For example, the network may be Bluetooth, Bluetooth Low Energy (BLE), or a Wi-Fi communication network.

Also, the server 300 according to an embodiment may include the user interface unit 320. The user interface unit 320 may be a unit for interface with an input/output device. For example, the input device may include a device such as a keyboard or mouse, and the output device may include a device such as a display for displaying a communication session of an application. As another example, the user interface unit 320 may also be a unit for interface with a device in which functions for input and output are integrated into one, such as a touch screen. In a more particular example, the processor 340 of the server 300 processes a command of a computer program loaded into the memory 330, such that a service screen or content configured using data provided by an external device may be displayed on the display through the user interface unit 320.

The memory 330 is a computer-readable recording medium and may include random access memory (RAM), read only memory (ROM), and permanent mass storage device such as a disk drive. Also, program code for controlling a logistics control system may be temporarily or permanently stored in the memory 330.

The processor 340 may obtain barcode information from a barcode information obtaining module provided in a logistics control system and obtaining barcode information of an article, the barcode information being attached to the article. Also, the processor 340 may obtain image information from an image information obtaining module that obtains image information about an article by synchronizing a photographing time point thereof with that of the barcode information obtaining module. Also, the processor 340 may monitor an article based on barcode information and image information.

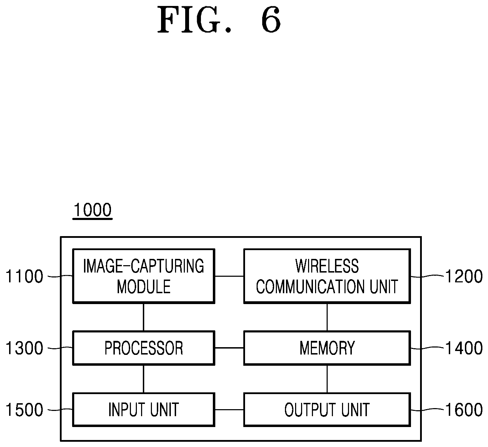

FIG. 6 is a diagram for describing an example of an internal block diagram of a camera according to an embodiment.

Referring to FIG. 6, the camera 1000 according to an embodiment may include an image-capturing module 1100, a wireless communication unit 1200, a processor 1300, a memory 1400, an input unit 1500, and an output unit 1600.

The image-capturing module 1100 may include the barcode information obtaining module 100 and the image information obtaining module 200. For example, the barcode information obtaining module 100 and the image information obtaining module 200 may be expressed as image sensors, and may be configured by including a monochrome sensor for mono-capturing and a color sensor for color-capturing. The monochrome sensor may be expressed as the barcode information obtaining module 100, and the color sensor may be expressed as the image information obtaining module 200.

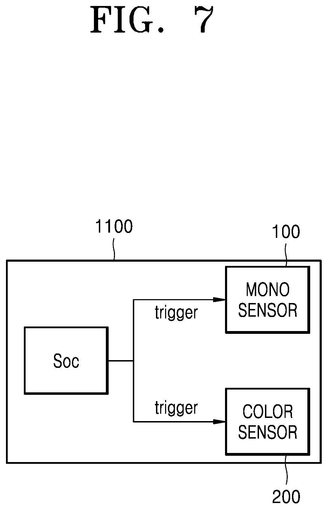

FIG. 7 is a diagram for describing an example of an internal block diagram of an image-capturing module according to an embodiment. Referring to FIG. 7, the image-capturing module 1100 may be viewed as including the barcode information obtaining module 100 and the image information obtaining module 200, which are implemented as a single system-on-chip (SoC).

The barcode information obtaining module 100 and the image information obtaining module 200 according to an embodiment may be simultaneously triggered by one signal in one SoC. For example, the barcode information obtaining module 100 and the image information obtaining module 200 may be simultaneously triggered by one signal in one SoC, so that the photographing time points of the barcode information obtaining module 100 and the image information obtaining module 200 may be synchronized.

Here, as shown in the drawing, the barcode information obtaining module 100 may represent a monochrome sensor, and the image information obtaining module 200 may represent a color sensor. For example, the image information obtaining module 200 may obtain color information of an article.

A fixed lens or a liquid lens may be applied to the barcode information obtaining module 100 according to an embodiment. In addition, a fixed lens or a liquid lens may also be applied to the image information obtaining module 200. In this case, a lens applied to the monochrome sensor of the barcode information obtaining module 100 and a lens applied to the color sensor of the image information obtaining module 200 may be the same or different.

For example, a camera that captures images of articles (boxes) moving on a conveyor belt may be fixed and installed above a certain height from the conveyor belt. In this case, because the articles (boxes) moving on the conveyor belt have various sizes, a distance between the articles and the camera changes every time, and thus it is important to achieve quick focus. When a fixed lens is applied to the barcode information obtaining module 100, the barcode information obtaining module 100 may achieve good focus within a certain range of distances. However, as the distance between the camera and the articles becomes closer than a certain distance, a clear focus may not be achieved. Therefore, a barcode is re-recognized through a barcode recognition algorithm.

The barcode information obtaining module 100 may have a liquid lens. As the speed of a conveyor belt increases, the recognition rate decreases. However, when a liquid lens is applied to the barcode information obtaining module 100, a focus may be achieved clearly and quicky to recognize the barcode regardless of the distance between the camera and the articles.

The monochrome sensor does not include a color filter and absorbs light of all wavelengths, and the color sensor absorbs light of a particular wavelength by including a color filter.

The wireless communication unit 1200 may perform data communication with an external device (a portable device, a server, or the like) through a network. The wireless communication unit 1200 may transmit captured images to an external camera system server or receive control commands from a user.

The wireless communication unit 1200 may include wireless communication modules or the like, such as Bluetooth, Wireless Fidelity (Wi-Fi), near field communication (NFC), wireless broadband internet (Wibro), ultra-wide band communication, Sub-1G, ZigBee, LoRa, or the like.

The processor 1300 generally controls the overall operation of the camera. The processor 1300 may provide or process appropriate information or functions to the user by processing signals, data, information, or the like input or output through the components described above or by driving an application program stored in the memory.

In addition, the processor 1300 may control at least some of the components described with reference to FIG. 6 together to drive the application program stored in the memory. Furthermore, the processor 1300 may operate at least two or more of the components included in the camera in cooperation with each other to drive the application program.

The processor 1300 may monitor the article based on barcode information obtained from the barcode information obtaining module 100 and image information obtained from the image information obtaining module 200. For example, the barcode information obtaining module 100 and the image information obtaining module 200 may capture images of articles in a common field of view (FOV) area. Here, the common FOV area may be formed as a common area of a first capturing area captured by the barcode information obtaining module 100 and a second capturing area captured by the image information obtaining module 200.

The processor 1300 may generate article status information by inserting the barcode information of the article into a metadata area related to the color information of the article and map the barcode information of the article with the color information of the article based on the article status information.

The processor 1300 may check the status or position of the article based on the barcode information of the article and the color information of the article.

The memory 1400 stores data supporting various functions of the camera. The memory 1400 may store a number of application programs or applications being driven by the camera, data for operating the camera, and commands. At least some of these application programs may be downloaded from an external server via wireless communication. An application program may be stored in a memory, installed on the camera, and driven by a processor to perform operations (or functions) of the camera.

The input unit 1500 may include a user input unit (e.g., a touch key, a mechanical key, or the like) for receiving information from the user. The input unit 1500 may further include a camera or image input unit for inputting image signals, a microphone or an audio input unit for inputting audio signals, or the like. Voice data or image data collected from the input unit 1500 may be analyzed and processed as a control command of the user.

The output unit 1600 is configured to generate outputs related to vision, hearing, or tactile senses, and may include a display unit, an audio output unit, or the like.

At least some of the above components may operate in cooperation with each other to implement the operation, control, or a control method of a camera according to various embodiments to be described below. In addition, the operation, control, or control method of the camera may be implemented on the camera by driving at least one application program stored in the memory.

In addition, the camera 1000 (e.g., a BCR camera) proposed in the disclosure has functions such as focus feedback, light-emitting diode (LED) setup, sensor mode, or the like, and may implement the method proposed in the disclosure through a Wise BCR OpenApp structure.

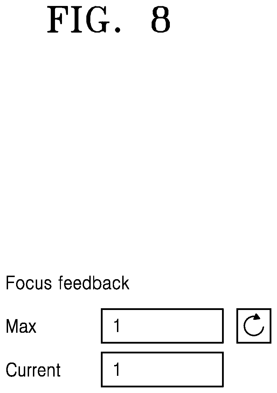

First, the focus feedback function is described. FIG. 8 shows an example of a focus feedback screen of the camera proposed in the disclosure.

The focus feedback function helps the camera find the best focus by showing a current focus peak value through a manual focus.

Referring to FIG. 8, when a focus feedback tab output on the screen of the camera is activated by the user, the focus feedback function is executed, and when a refresh button is input or activated by the user, a MAX value may be initialized.

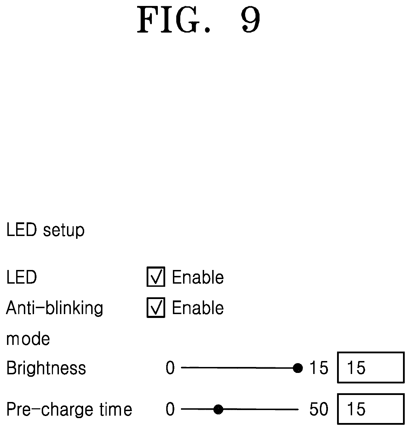

Next, the LED setup function is described. FIG. 9 shows an example of an LED setup screen of the camera proposed in the disclosure.

That is, the camera proposed in the disclosure may further include an LED module, and the LED module may be arranged on one side of a housing that simultaneously includes a barcode information obtaining module and an image information obtaining module.

The LED setup supports an LED lighting setup of the camera. In particular, the LED setup supports enable, brightness, pre-charge time, and an anti-blinking mode functions.

The enable function sets the turning on/off of the LED, the brightness function sets the current pulse width modulation (PWM) duty of the LED, the pre-charge time function sets the duty of an LED signal to a margin of a few us before/after a shutter cycle.

The anti-blinking mode function activates high-frequency lighting to prevent lighting from blinking when being enabled or activated.

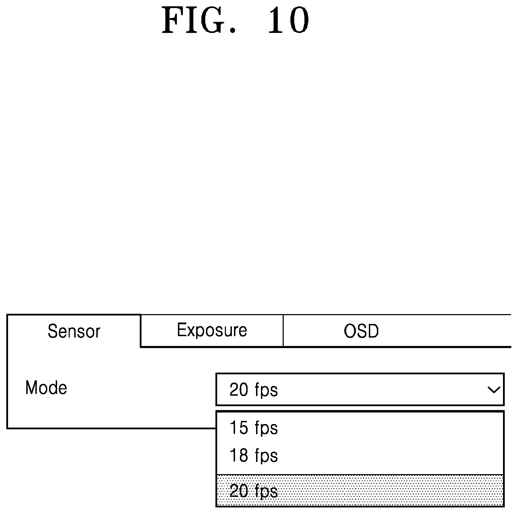

Next, the sensor mode is described. FIG. 10 shows an example of a sensor mode screen of the camera proposed in the disclosure.

The sensor mode is a mode for securing Al performance, which supports 15, 18, and 20fps, reboots the camera when the sensor mode is changed, resets an input pipeline, and re-execute the WiseBCR App.

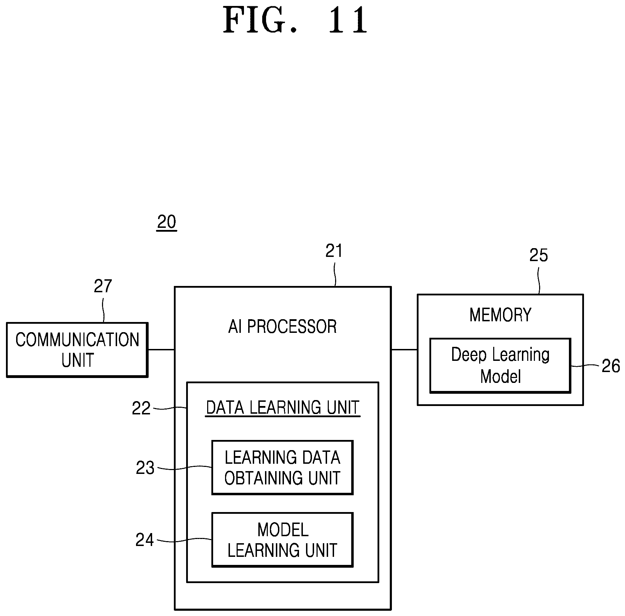

FIG. 11 is a diagram for describing an example of a block diagram of an Al device to which a method according to an embodiment is applied.

An Al device 20 may be included as at least a portion of the camera 1000 or the server 300 shown in FIG. 2 and may be equipped to perform at least part of Al processing together.

The Al device 20 may include an Al processor 21, a memory 25, and/or a communication unit 27. When the Al device 20 is included in the camera 1000, the communication unit 27 may also be omitted.

The Al device 20 is a computing device capable of learning neural networks, and may be implemented with various electronic devices such as cameras, servers, desktop personal computers (PC), laptop PCs, tablet PCs, or the like.

The Al processor 21 may learn a neural network by using a program stored in the memory 25. In particular, the Al processor 21 may learn a neural network for recognizing image-related data. Here, the neural network for recognizing image-related data may be designed to simulate the structure of human brain on a computer, and may include a plurality of network nodes with weights, which simulates neurons of a human neural network. A plurality of network nodes may exchange data according to each connection relationship to simulate the synaptic activity of neurons sending and receiving signals through synapses. Here, the neural network may include a deep learning model developed from a neural network model. In the deep learning model, the plurality of network nodes are located in different layers and may exchange data according to convolutional connection relationships.

For example, examples of the neural network model may include various deep learning techniques such as deep neural networks (DNN), convolutional deep neural networks (CNN), recurrent Boltzmann machine (RNN), restricted Boltzmann machine (RBM), deep belief networks (DBN), and deep Q-Network, and may be applied to fields such as computer vision, speech recognition, natural language processing, and voice/signal processing.

A processor performing the above functions may be a general-purpose processor (e.g., a central processing unit (CPU), or may be an Al-specific processor (e.g., a graphics processing unit (GPU) for Al learning.

The memory 25 may store various types of programs and data necessary for the operation of the Al device 20. The memory 25 may be implemented as non-volatile memory, volatile memory, flash-memory, a hard disk drive (HDD), or a solid state drive (SDD). The memory 25 may be accessed by the Al processor 21, and reading/writing/modifying/deleting/updating data by the Al processor 21 may be performed. In addition, the memory 25 may store a neural network model (e.g., a deep learning model 26 and a Re-ID model 28) generated through a learning algorithm for image analysis according to an embodiment.

The Al processor 21 may include a data learning unit 22 that learns a neural network for image analysis. The data learning unit 22 may learn standards regarding what learning data to use to determine image analysis and how to classify and recognize data by using the learning data. The data learning unit 22 may lean a deep learning model by obtain learning data to be used for learning and applying the obtained learning data to a deep learning model.

The data learning unit 22 may be manufactured in the form of at least one hardware chip and mounted on the Al device 20. For example, the data learning unit 22 may also be manufactured in the form of a dedicated hardware chip for Al, or may be manufactured as a part of a CPU or GPU and mounted on the Al device 20. In addition, the data learning unit 22 may be implemented as a software module. When the data learning unit 22 is implemented as a software module (or a program module including instructions), the software module may be stored in non-transitory computer readable media that may be read by a computer. In this case, at least one software module may be provided by an operating system (OS) or an application.

The data learning unit 22 may include a learning data obtaining unit 23 and a model learning unit 24.

The learning data obtaining unit 23 may obtain learning data necessary for a neural network model for image analysis. For example, the learning data obtaining unit 23 may obtain image data and/or sample data to be input to a neural network model as learning data.

The model learning unit 24 may use the obtained learning data so that the neural network model learns to have a determination standard on how to classify certain data. At this time, the model learning unit 24 may train a neural network model through supervised learning that uses at least some of the pieces of learning data as a determination standard. Alternatively, the model learning unit 24 may train a neural network model, through unsupervised learning, which discovers a determination standard, by learning on its own by using the learning data without guidance. In addition, the model learning unit 24 may train a neural network model through reinforcement learning by using a feedback on whether a result of situation determination according to learning is correct. In addition, the model learning unit 24 may train a neural network model by using a learning algorithm including error back-propagation or gradient descent.

When a neural network model is trained, the model learning unit 24 may store the trained neural network model in a memory. The model learning unit 24 may also store the trained neural network model in a memory of a server connected to the Al device 20 through a wired or wireless network.

]The data learning unit 22 may also further include a learning data pre-processing unit (not shown) or a learning data selection unit (not shown) to improve analysis results of a recognition model or to save resources or time required for generating a recognition model.

The learning data pre-processing unit may pre-process the obtained data so that the obtained data may be used in learning for situation determination. For example, the learning data pre-processing unit may process the obtained data into a preset format so that the model learning unit 24 may use the obtained learning data for learning image recognition.

In addition, the learning data selection unit may select data required for learning among the learning data obtained from the learning data obtaining unit or the learning data pre-processed in the pre-processing unit. The selected learning data may be provided to the model learning unit 24. For example, the learning data selection unit may detect a particular area among the image obtained through the camera to select only data for an object included in the particular area as learning data.

In addition, the data learning unit 22 may also further include a model evaluation unit (not shown) to improve the analysis results of the neural network model.

The model evaluation unit may input evaluation data into a neural network mode; and when the analysis result output from the evaluation data does not meet a certain standard, the model evaluation unit may allow the model learning unit 22 to learn again. In this case, the evaluation data may be predefined data for evaluating a recognition model. For example, the model evaluation unit may evaluate the analysis result as not meeting a certain standard when the number or ratio of inaccurate evaluation data among analysis results of the learned recognition model for the evaluation data exceeds a preset threshold.

The communication unit 27 may transmit the results of Al processing by the Al processor 21 to an external device.

The Al device 20 shown in FIG. 11 has been described as functionally divided into the Al processor 21, the memory 25, the communication unit 27, or the like, but the above mentioned components are integrated into one module and are referred to as an Al module.

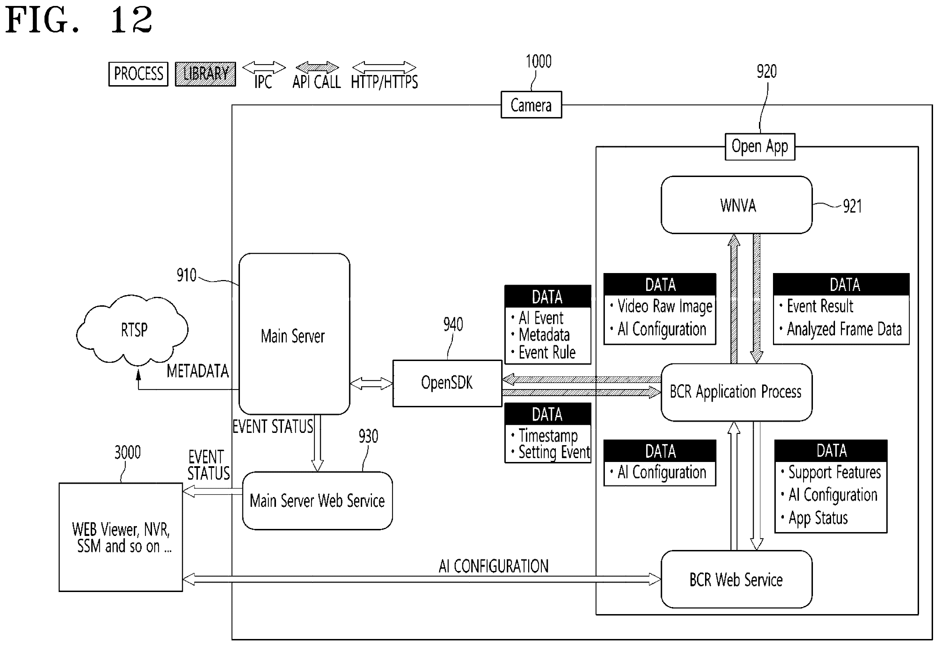

FIG. 12 is a diagram for describing an example of an operating method of a BCR open application for performing the method according to an embodiment.

Referring to FIG. 12, a BCR open application that performs the method of checking the logistics control or article status proposed in the disclosure may communicate with a processor (or a main server) of the camera.

The operating method of the BCR open application is described in more detail.

The main server of the camera 1000 may mean a processor of the camera, and the main server communicates with an open application 920 stored in a memory through an OpenSDK 940.

Also, a wise net video analytics (WNVA) library 921 of the open application may be a core library for video (or image) analysis.

That is, the WNVA analyzes raw video frames and transmits an analysis result about whether an event has occurred and about an object (or object) to the outside.

That is, the WNVA may confirm and analyze whether barcode information of an article and color information of an article has been obtained from the captured images through a barcode information obtaining module and an image information obtaining module, and may transmit an analysis result to an external device.

The open application transmits settings and video raw frames to the WNVA.

There are two types of metadata related to open application operations, including frame metadata and event metadata in an XML format.

The frame metadata and event metadata are generated based on analysis results of each video raw frame from the WNVA.

The metadata is transmitted to the main server through the open SDK, and the main server transmits the metadata to an external device through a real time streaming protocol (RTSP).

A web viewer uses frame metadata to overlay objects in a video (or image) and display edges of the video by using the event metadata when an object is detected.

In addition, an event status refers to information delivered from the WNVA when an object set by each Al function is detected.

The open application configures events received by the WNVA into event metadata and transmits the event metadata to the main server of the camera by using an open SDK application programming interface (API).

A web service 930 serves to transmit and receive information between the open application and an external device (backend product) 3000 such as a web viewer, a network video recorder (NVR), a smart security manager (SSM), and the main process processes GET/SET settings requested by the backend product.

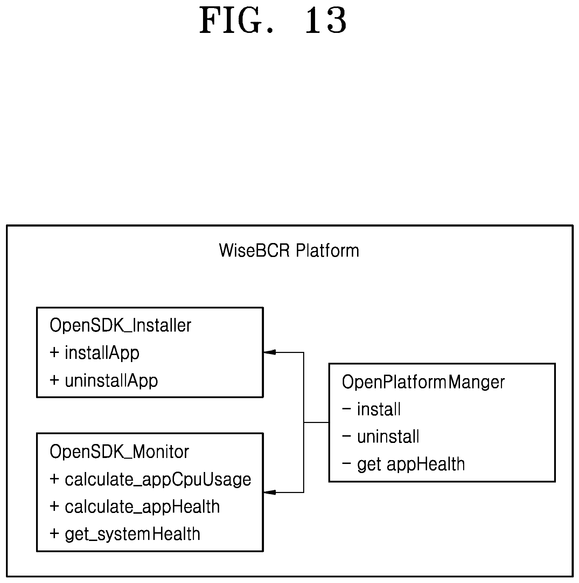

Next, the operation of an OpenPlatform Manager is described. FIG. 13 shows an example of the a BCR platform structure proposed in the disclosure.

Referring to FIG. 13, a WiseBCR platform may operate for install/uninstall, run, resource control, or the like.

First, install/uninstall means installing an application from a permitted area, run is executing an application, and resource control is checking the use of memory and checking whether a resource limit has been exceeded.

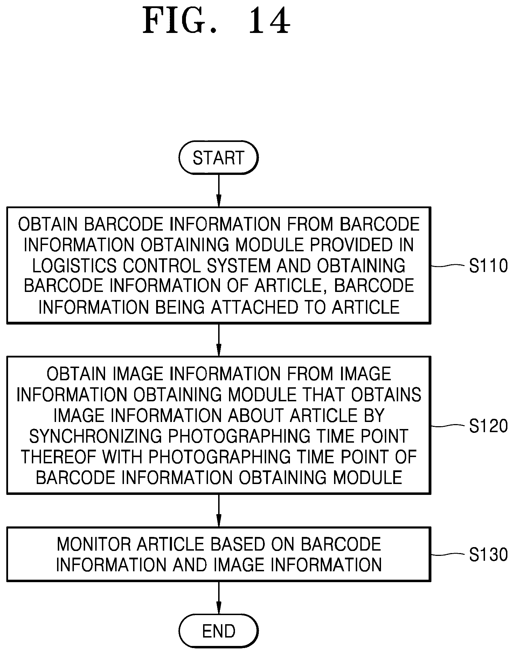

FIG. 14 is a flowchart showing a logistics control method according to an embodiment.

Referring to FIG. 14, in operation S110, the processor 340 may obtain barcode information from a barcode information obtaining module provided in a logistics control system and obtaining barcode information of an article, the barcode information being attached to the article. For example, the barcode information obtaining module may obtain barcode information of an article moving on a conveyor and transmit the obtained barcode information to the processor 340. For example, barcode information of an article may include information such as an invoice number, a barcode number, and a barcode included in an invoice attached to the article.

The barcode information obtaining module 100 may obtain barcode information for each of a plurality of articles moving on a conveyor of the logistics control system. For example, the barcode information obtaining module 100 may obtain barcode information of an article that passes a predetermined zone on a conveyor at a time point when the article passes the predetermined zone on the conveyor.

The processor 340 according to an embodiment may obtain barcode information of articles respectively from a first barcode information obtaining module provided at a first location and a second barcode information obtaining module provided at a second location. For example, the processor 340 may obtain barcode information from the first barcode information obtaining module provided at the first location, which is a drop-off point in a terminal. Also, the processor 340 may obtain barcode information from the second barcode information obtaining module provided at the second location, which is a loading point in the terminal.

In operation S120, the processor 340 may obtain image information from an image information obtaining module that obtains image information about an article by synchronizing a photographing time point thereof with that of the barcode information obtaining module. For example, the image information obtaining module may obtain image information of an article moving on a conveyor and transmit the obtained image information to the processor 340. For example, image information of an article may include information such as a video or image of the article moving on the conveyor.

The image information obtaining module 200 may obtain image information of each of a plurality of articles moving on a conveyor of the logistics control system. For example, the image information obtaining module 200 may obtain image information of an article that passes a predetermined zone on a conveyor at a time point when the article passes the predetermined zone on the conveyor.

In addition, the image information obtaining module 200 may obtain image information about an article at the same time point as a time point when the barcode information obtaining module 100 obtains barcode information of an article, wherein the article of which the image information is obtained by the image information obtaining module 200 is same as the article of which the barcode information is obtained by the barcode information obtaining module 100. That is, the photographing time point of the barcode information obtaining module 100 may be synchronized with the photographing time point of the image information obtaining module 200, so that the barcode information obtaining module 100 and the image information obtaining module 200 may match and obtain barcode information and image information of each of a plurality of articles moving on a conveyor.

The processor 340 according to an embodiment may obtain image information of articles respectively from a first image information obtaining module and a second image information obtaining module, wherein the first image information obtaining module is provided at the first location and having a photographing time point synchronized with that of the first barcode information obtaining module, and the second image information obtaining module is provided at the second location and having a photographing time point synchronized with that of the second barcode information obtaining module.

In addition, the processor 340 according to an embodiment may calculate the number of articles by recognizing articles, based on image information obtained from the first image information obtaining module and the second image information obtaining module. For example, the processor 340 may calculate the number of articles passing through the first location, based on the image information obtained by the first image information obtaining module provided at the first location. Also, the processor 340 may calculate the number of articles passing through the second location, based on the image information obtained by the second image information obtaining module provided at the second location.

In operation S130, the processor 340 may monitor an article based on the barcode information and the image information. For example, the processor 340 may monitor a moving state of an article in the logistics control system based on the barcode information and the image information of the article.

The processor 340 according to an embodiment may monitor moving states of articles in the logistics control system, based on first barcode information and first image information of an article at the first location, and second barcode information and second image information of an article at the second location. For example, the processor 340 may monitor moving states of a plurality of articles, based on barcode information and image information of each of the plurality of articles at the first location, which is a drop-off point in a terminal, and barcode information and image information of each of the plurality of articles at the second location, which is loading point in the terminal.

Also, the processor 340 according to an embodiment may find out an article with an unrecognized barcode by comparing article information in the first barcode information with article information in the first image information. In addition, the processor 340 may recognize barcode information of an unrecognized article by mapping the first barcode information and the first image information. For example, the processor 340 may find out an article with an unrecognized barcode by comparing a list of articles passing through the first location, which is identified based on the barcode information, with a list of articles passing through the first location, which is identified based on the image information.

Also, the processor 340 according to an embodiment may determine whether an article is lost between the first location and the second location, based on the first barcode information and the first image information, and the second barcode information and the second image information. For example, the processor 340 may determine whether an article is lost between the first location and the second location, based on a list of articles at the first location, which is identified through the first barcode information and the first image information, and a list of articles at the second location, which is identified through the second barcode information and the second image information.

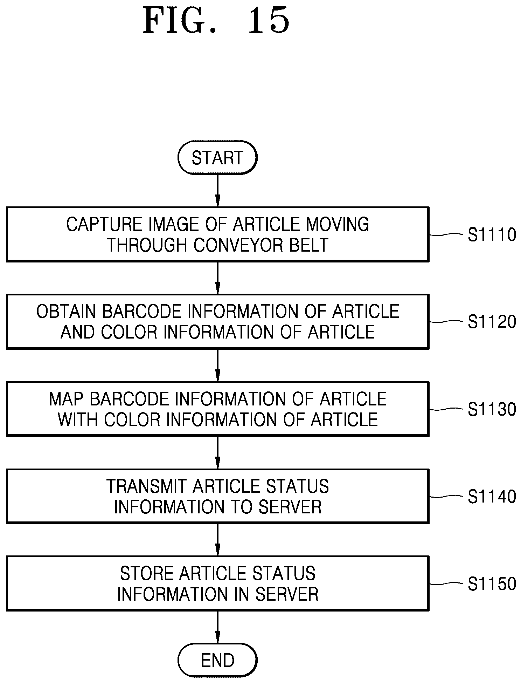

FIG. 15 is a flowchart illustrating an example of a method of performing logistics control according to an embodiment.

First, a camera captures one or more objects moving through a conveyor belt in operation S1110.

Also, the camera obtains barcode information of an article through a barcode information obtaining module in a common FOV area of the barcode information obtaining module and an image information obtaining module, which are included in a camera module of the camera, and obtains color information through the image information obtaining module in operation S1120.

The common FOV area may be set differently depending on the arrangement of the barcode information obtaining module and the image information obtaining module, which are implemented in the camera module.

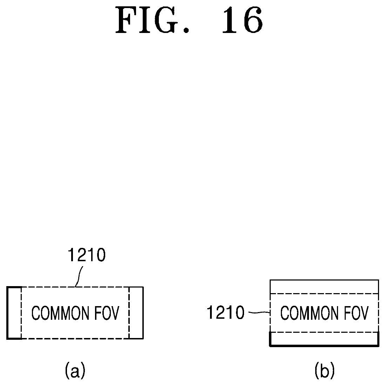

FIG. 16 is a diagram showing an example of a common FOV area of the camera proposed in the disclosure.

FIG. 16A shows a common FOV area 1210 when the barcode information obtaining module 100 and the image information obtaining module 200 are arranged horizontally on the conveyor belt. FIG. 16B shows the common FOV area 1210 when the barcode information obtaining module and the image information obtaining module are arranged vertically on the conveyor belt. For example, the width (either horizontal or vertical) of the common FOV area may be equal to or greater than the width of the conveyor belt. For example, the horizontal or vertical width of the common FOV area may be equal to or greater than the width of the conveyor belt.

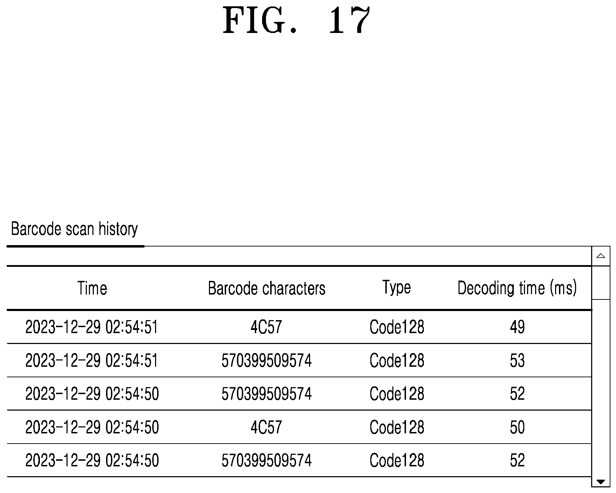

FIG. 17 is a diagram for describing an example of barcode information of an object according to an embodiment.

Referring to FIG. 17, it may be seen that barcode information is recorded for each barcode.

The barcode information obtaining module may be a monochrome sensor that performs mono capturing, and the image information obtaining module may be a color sensor that performs color capturing, and the camera may be a BCR camera.

The barcode information obtaining module and the image information obtaining module are simultaneously triggered by one signal, so that the photographing time points thereof are synchronized.

Here, the reason why the color information of the article must be obtained through the image information obtaining module is because the condition of the product, such as damage to the product, may not be properly determined only with the barcode information obtained through the barcode information obtaining module.

That is, when the color of the article appears blurred in the color information of the article, it may be assumed that the article is damaged.

In addition, the logistics control system proposed in the disclosure adds barcode information of the article, color information of the article, and a stereo camera function, so that information about the scale of the article (or cargo), such as size and volume, may also be checked.

In addition, the logistics control system proposed in the disclosure may additionally obtain color information of an article, thereby enabling tracking for the position of the article for which the barcode information of the article is not recognized.

Also, the camera proposed in the disclosure may reduce the discrepancy in the FOV captured by each sensor by configuring the barcode information obtaining module and the image obtaining module as one housing one Soc in the camera.

That is, in the related art, as an image of an object is captured by using two cameras including one sensor in each camera, there is a gap in a frame of an image captured by each camera due to the difference in speed of a conveyor belt transporting the articles, making it difficult for the barcode of the article to be recognized properly.

However, the logistics control system proposed in the disclosure solves the problem of frame gaps occurring due to the speed of the conveyor belt by horizontally or vertically arranging two image sensors implemented with one Soc in one camera.

In addition, when an image of an object is captured by using two cameras in the related art, even when each camera is set to the same fps, and the power of each camera is turned on at the same time, there is a difference in the time when fps starts depending on the specification (performance) of each camera, resulting in a gap between fps. As a result, there was a problem where a barcode image and a color image did not match properly. For example, in the barcode image, an object is positioned in the center of the FOV, but in the color image matched with the barcode image, the article has already passed, so only a portion of the article is visible in the FOV.

However, a one-body camera in which the barcode information obtaining module and the image information obtaining module proposed in the disclosure are included in one housing and one SoC within the camera is simultaneously triggered with one signal in one Soc, and thus image mismatch was solved.

Here, the camera may analyze the obtained barcode information of the article and the obtained color information of the article through the Al device (or Al module) shown in FIG. 11 and the BCR open application operation procedure shown in FIG. 12, and may provide an analysis result to an external device.

Also, the camera matches the obtained barcode information of the article with the obtained color information of the article in operation S1130.

The camera generates article status information by inserting the barcode information of the article obtained by the barcode information obtaining module into a metadata area related to the color information of the article obtained by the image information obtaining module.

Accordingly, the logistics control system may track the color image of the article with a timeline for each barcode information (or barcode data) of the article.

Also, the camera transmits the generated article status information to a server connected to the camera through a network in operation S1140.

The server stores and manages the received article status information in a database in operation S1150.

That is, the camera or the server may check the status of the article or track the position of the article based on the obtained barcode information of the article and the obtained color information of the article.

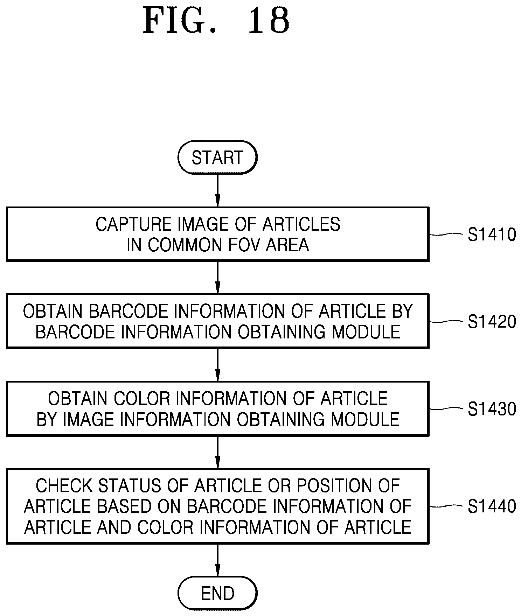

FIG. 18 is a flowchart illustrating another example of a method of performing logistics control according to an embodiment.

First, a camera captures an image of one or more articles moving through a conveyor belt in a common FOV area formed by a barcode information obtaining module and an image information obtaining mode, which are simultaneously triggered by one signal and the photographing time points thereof are synchronized, in operation S1410.

Also, the camera obtains barcode information of the article from the captured image by the barcode information obtaining module in operation S1420.

Also, the camera obtains color information of the article from the captured image by the image information obtaining module in operation S1430.

Here, it is preferable that operations S1420 and S1430 are simultaneously performed, and each operation is described separately for convenience of understanding and explanation.

Also, the camera checks the status of the article or the position of the article based on the obtained barcode information of the article and the obtained color information of the article in operation S1440.

Additionally, the camera may match the obtained barcode information of the article with the obtained color information of the article.

In more particular, the camera may match the barcode information of the article with the color information of the article by inserting the barcode information of the article into a metadata area included in the color information of the article to generate article status information.

Also, the camera may transmit the generated article status information to a server.

In addition, the camera may check whether a first capturing area captured by the barcode information obtaining module matches a second capturing area captured by the image information obtaining module, and when the first capturing area and the second capturing area do not match, the camera may synchronize the triggering time points of the barcode information obtaining module and the image information obtaining module.

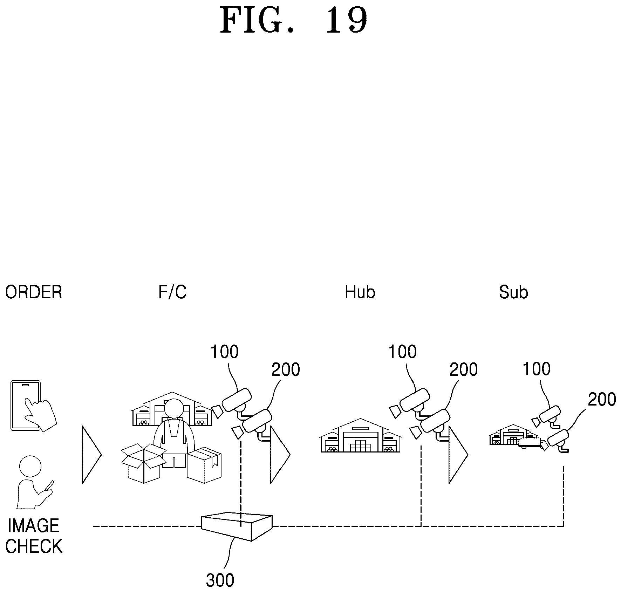

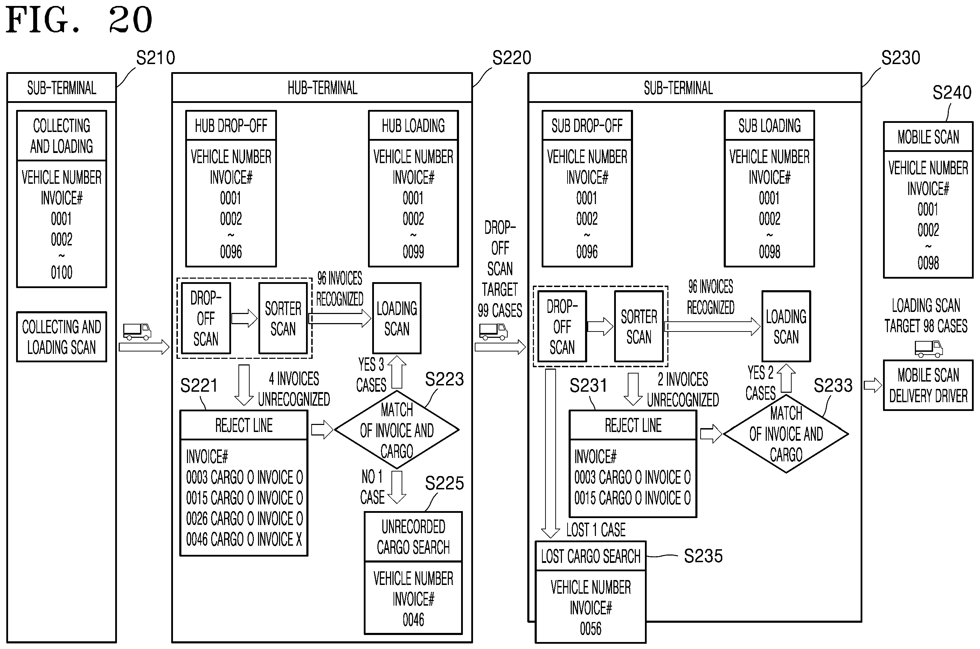

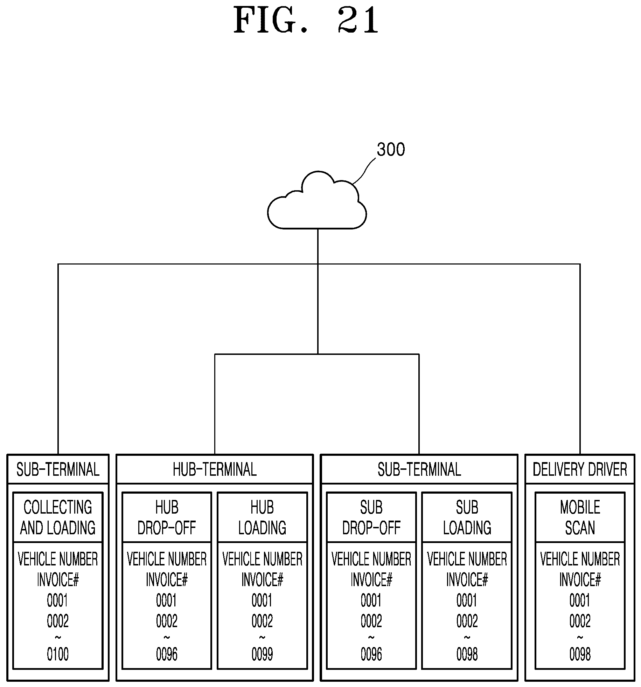

FIGS. 19 and 20 are diagrams for explaining operations of a logistics control system according to an embodiment. Also, FIG. 21 is a diagram for explaining an operation of a server of a logistics control system according to an embodiment.

Referring to FIG. 19, according to an embodiment, a logistics control system in which the barcode information obtaining module 100 and the image information obtaining module 200 are provided in each logistics terminal is shown. Here, the barcode information obtaining module 100 and the image information obtaining module 200, which are provided in each logistics terminal, may each be connected to the server 300 through a network.

According to an embodiment, based on synchronized barcode information and image information, an integrated solution for picking and packing processes may be provided, and end-to-end images may be provided. Accordingly, evidence data for picking errors and packing errors may be provided, and articles in a logistics system may be tracked.

FIG. 20 shows an operation of a logistics control system according to an embodiment according to a logistics flow.

According to the need for tracking and management when a troubled cargo occurs (unrecorded/lost/stolen) in a logistics process, the logistics control system according to an embodiment may check lost/stolen/deviation/unrecorded cases early enough through searching for remaining articles in individual terminals of Hub and Sub. Also, the logistics control system according to an embodiment may search for remaining articles between centers by grouping hub-terminals, sub-terminals, and delivery drivers based on cloud linkage. In addition, the logistics control system according to an embodiment may detect the possibility of the occurrence of conflict for each process at an early stage through an image-based article counting solution.

Also, according to an embodiment, in a logistics process, unrecorded cargo invoice tracking and matching solutions may be provided to prevent an accident in which delivery cannot proceed when an invoice is dropped off. For example, according to an embodiment, in the tracking of unrecorded cargo invoices, an original invoice may be matched with an unrecorded cargo by checking the original invoice of an article based on images by tracking a delivery history through before/after cargo invoice images.

For example, as shown in FIG. 20, in operation S210, in a sub-terminal, 100 invoice numbers and 100 images with respect to 100 articles may respectively be obtained through a barcode information obtaining module and an image information obtaining module. For example, the 100 images may represent 100 image frames at the same time points as 100 times of barcode obtaining time points of which the barcode information obtaining module obtains barcode information for one image captured by the image information obtaining module.

For example, referring to FIG. 21 together, information on vehicle numbers, invoice numbers 1 to 100, and images 1 to 100 at collecting and loading points in a sub-terminal may be stored in the server 300. For example, the server 300 may be a cloud server.

In operation S220, at a hub drop-off point in a hub-terminal, 96 invoice numbers and 100 images with respect to 100 articles may be respectively obtained through the barcode information obtaining module and the image information obtaining module. Also, at a hub loading point, 99 invoice numbers and 99 images with respect to 99 articles may respectively obtained through the barcode information obtaining module and the image information obtaining module.

For example, referring to FIG. 21 together, information on vehicle numbers, invoice numbers, and images at hub drop-off and hub loading points of the hub-terminal may be stored in the server 300. For example, the server 300 may be a cloud server.

In operation S221, at the hub drop-off point of the hub-terminal, an article with an unrecognized invoice may be found out based on barcode information and image information respectively obtained through the barcode information obtaining module and the image information obtaining module. For example, as shown in FIG. 20, articles with invoice numbers 3, 15, 26, and 46 are cargoes for which the number of articles is counted in obtained image information but are cargoes for which barcode information has not been identified within obtained barcode information. Here, articles with invoice numbers 3, 15, and 26 are cargoes with invoices attached thereto, but the barcodes thereof are not recognized. The article with invoice number 46 is a cargo without an invoice attached thereto. In this case, the article with invoice number 46 may have been dropped out in a logistics process. For example, an invoice may include barcode information.

In operation S223, an invoice and an article may be matched for an unrecognized article based on the barcode information and the image information respectively obtained through the barcode information obtaining module and the image information obtaining module. For example, as shown in FIG. 20, articles and invoices may be matched for the articles with invoice numbers 3, 15, and 26, based on barcode information and image information, which have synchronized photographing time points with respect to the articles with invoice numbers 3, 15, and 26.

In operation S225, an original invoice and an article may be matched with respect to an article of which the invoice is dropped off, based on the barcode information and the image information respectively obtained through the barcode information obtaining module and the image information obtaining module. For example, as shown in FIG. 20, an original invoice may be matched with the article with invoice number 46, based on original invoice information and image information obtained in the sub-terminal in operation S210 and image information obtained in the hub-terminal in operation S220 with respect to the article with invoice number 46, from which the invoice is dropped off.

In operation S230, at a sub drop-off point of the sub-terminal, 96 invoice numbers and 98 images with respect to 99 articles may be respectively obtained through the barcode information obtaining module and the image information obtaining module. Also, at a sub loading point, 98 invoice numbers and 98 images with respect to 98 articles may respectively obtained through the barcode information obtaining module and the image information obtaining module.

For example, referring to FIG. 21 together, information on vehicle numbers, invoice numbers, and images at the sub drop-off and sub loading points of the sub-terminal may be stored in the server 300. For example, the server 300 may be a cloud server.

In operation S231, at the sub drop-off point of the sub-terminal, an article with an unrecognized invoice may be found out based on barcode information and image information respectively obtained through the barcode information obtaining module and the image information obtaining module. For example, as shown in FIG. 20, articles with invoice numbers 3 and 15 are cargoes for which the number of articles is counted in obtained image information but are cargoes for which barcode information has not been identified within obtained barcode information. Here, the articles with invoice numbers 3 and 15 are cargoes having invoices attached thereto but whose barcodes are not recognized. For example, an invoice may include barcode information.

In operation S233, an invoice and an article may be matched for an unrecognized article based on the barcode information and the image information respectively obtained through the barcode information obtaining module and the image information obtaining module. For example, as shown in FIG. 20, articles and invoices may be matched for the articles with invoice numbers 3 and 15, based on barcode information and image information, which have synchronized photographing time points with respect to the articles with invoice numbers 3 and15.

In operation S235, lost articles may be searched for based on a plurality pieces of barcode information and image information obtained through a plurality of barcode information obtaining modules and image information obtaining modules. For example, as shown in FIG. 20, an article with invoice number 56 may be searched for based on the barcode information and the image information obtained at the hub loading point of the hub-terminal in operation S220 and the barcode information and the image information obtained at the sub drop-off point of the sub-terminal in operation S230.

In operation S240, at a delivery driver loading point, 98 invoice numbers and 98 images for 98 articles may be respectively obtained through the barcode information obtaining module and the image information obtaining module. For example, referring to FIG. 21, information on vehicle numbers, invoice numbers 1 to 98, and images 1 to 98 at the delivery driver loading point may be stored in the server 300.

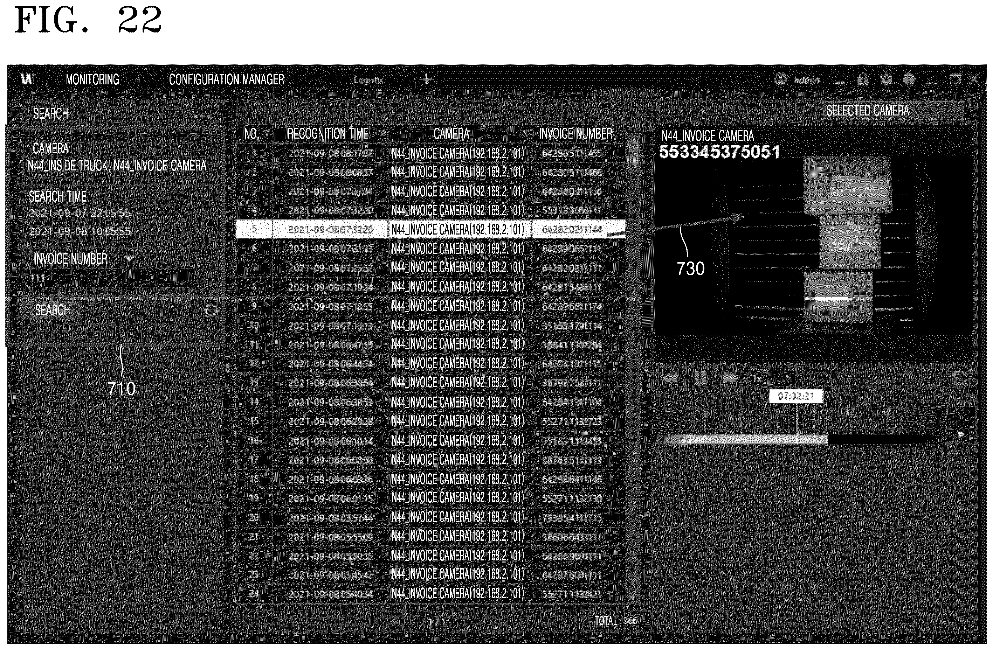

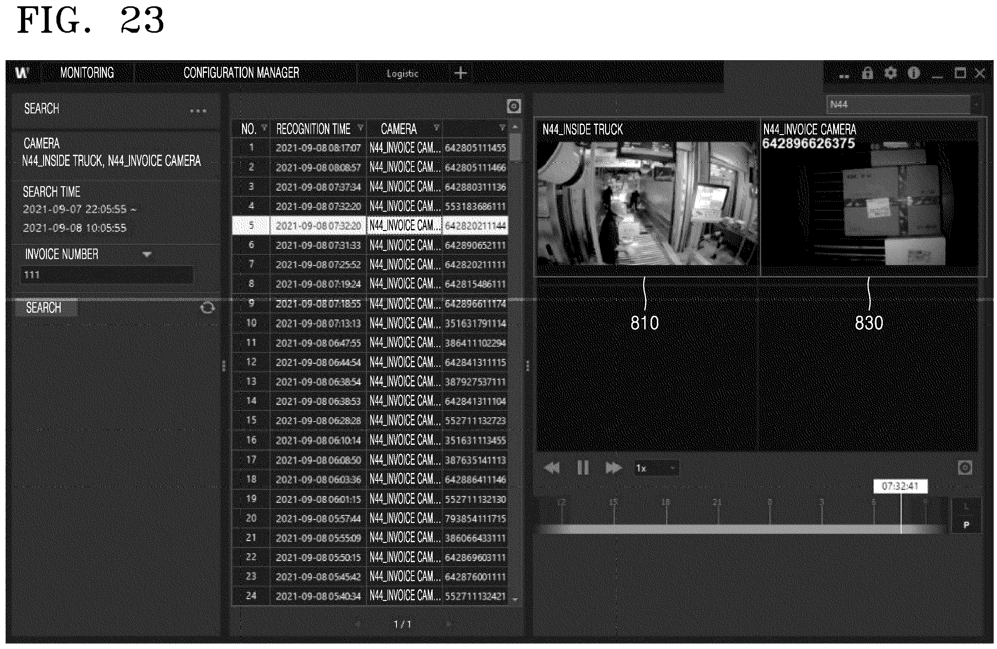

FIGS. 22 and 23 are diagrams for explaining a logistics control method according to an embodiment.

Referring to FIGS. 22 and 23, a user interface screen capable of checking barcode information and image information respectively obtained through a barcode information obtaining module and an image information obtaining module is shown.

For example, as shown in FIG. 22, when an invoice number is input to an invoice number search window 710, image information about an article corresponding to the invoice number may be searched 730 and displayed together on the screen. For example, one image information obtaining module may be selected from among a plurality of image information obtaining modules in the invoice number search window 710. In this case, one piece of image information obtained from the selected one image information obtaining module may be searched.

For example, as shown in FIGS. 22 and 23, a plurality of image information obtaining modules may be selected in the invoice number search window 710. In this case, a plurality of pieces of image information 810 and 830 obtained by the plurality of image information obtaining modules may be searched.

The devices and/or systems described above may be implemented as hardware components, software components, and/or a combination of hardware components and software components. The devices and components described in the embodiments may be, for example, implemented by using one or more implemented using one or more general-purpose computers or special-purpose computers, such as an arithmetic logic unit (ALU), a digital signal processor, a field programmable gate array (FPGA), a programmable logic unit (PLU), a microprocessor, or any other device that may execute and respond to instructions. A processing device may run an operating system (OS) and one or more software applications running on the operating system. Also, the processing device may also access, store, manipulate, process, and generate data in response to execution of software. For convenience of understanding, a case where one processing unit is used is described, but those skilled in the art will appreciate that a processing device may include multiple processing elements and/or a plurality of types of processing elements. For example, the processing device may include a plurality of processors or a processor and a controller. Also, other processing configurations are also possible, such as parallel processors.

Software may include a computer program, code, instructions, or a combination of one or more thereof, which may configure a processing device to operate as desired or may command the processing devices independently or collectively. Software and/or data may be permanently or temporarily embodied in any tangible machine, component, physical device, virtual equipment, computer storage medium or device, or transmitted signal wave to be interpreted by a processing device or to provide instructions or data to the processing device. Software may be distributed on networked computer systems and stored or executed in a distributed manner. Software and data may be stored on one or more computer-readable recording media.

The method according to an embodiment may be implemented in the form of program instructions that can be executed through various computer units and recorded on a computer readable recording medium. A computer-readable recording medium may include program instructions, data files, data structures, etc. alone or in combination. Program instructions recorded on the medium may be specially designed and configured for the embodiments or may be known and usable to those skilled in computer software. Examples of computer-readable recording media include hardware devices specially configured to store and execute program instructions, such as magnetic media such as hard disks, floppy disks, and magnetic tapes, optical media such as CD-ROMs and DVDs, magneto-optical media such as floptical disks, and ROM, RAM, and flash memory. Examples of program instructions include high-level language codes that can be executed by a computer using an interpreter or the like, as well as machine language codes such as those produced by a compiler. The hardware devices described above may be configured to operate as one or more software modules to perform the operations of the embodiments, and vice versa.

According to an embodiment as described above, provided is camera provided in logistics control systems and including two sensors having synchronized photographing time points and configured in one housing.

In addition, according to an embodiment, the status of an article, that is, damage or theft of the article, and the position of the article may be checked by obtaining barcode information of the article and the color information of the article by respectively using two image sensors, which are synchronized.

In addition, according to an embodiment, the size, volume, or the like of the article may be calculated through the barcode information of the article, the color information of the article, a stereo function, or the like to be effectively used for logistics delivery. The scope of the disclosure is not limited by these effects.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. A camera (1000) comprised in a logistics control system (1), the camera (1000) comprising:
a barcode information obtaining module (100) configured to capture an image of a barcode of an article, which is attached to the article, and obtain barcode information of the barcode;
an image information obtaining module (200) configured as one housing with the barcode information obtaining module (100) and configured to obtain image information of the article by capturing an image of the article and be simultaneously triggered by one signal to have a synchronized photographing time point with the barcode information obtaining module (100); and
a processor (340, 1300) configured to monitor the article based on the barcode information and the image information,
wherein the barcode information obtaining module (100) and the image information obtaining module (200) capture the article in a common field of view, FOV, area (1210),
the common FOV area (1210) is formed as a common area of a first capturing area captured by the barcode information obtaining module (100) and a second capturing area captured by the image information obtaining module (200), and
**characterized in that**
the barcode information obtaining module (200) and the image information obtaining module (100) are included in one system-on-chip, SoC, to be simultaneously triggered by one signal to have synchronized photographing time points.

2. The camera (1000) of claim 1, wherein the barcode information obtaining module (100) comprises a liquid lens.

3. The camera (1000) of claim 1, wherein a horizontal or vertical width of the common FOV area (1210) is equal to or greater than a width of a conveyor belt.

4. The camera (1000) of claim 1, wherein the barcode information obtaining module (100) comprises a monochrome sensor, the image information obtaining module (200) comprises a color sensor, and the image information obtaining module (200) obtains color information of the article.

5. The camera (1000) of claim 4, wherein the processor (340, 1300) is further configured to generate article status information by inserting the barcode information of the article into a metadata area related to the color information of the article and map the barcode information of the article with the color information of the article based on the article status information.

6. The camera (1000) of claim 5, wherein the processor (340, 1300) is further configured to check a status of the article or a position of the article based on the barcode information of the article and the color information of the article.

7. The camera (1000) of claim 1, further comprising a light-emitting diode (LED) arranged on one side of the housing.

8. A method of controlling a camera (1000) comprised in a logistics control system (1), the method comprising:
obtaining barcode information of an article by using a barcode information obtaining module (100) that captures an image of a barcode of the article, which is attached to the article, and obtaining image information about the article by using an image information obtaining module (200) that is configured as one housing with the barcode information obtaining module (100) and simultaneously triggered by on signal to have a synchronized photographing time point with the barcode information obtaining module (100); and
monitoring the article based on the barcode information and the image information,
wherein the obtaining of the image information about the article comprises capturing images of articles in a common field of view, FOV, area (1210) by using the barcode information obtaining module (100) and the image information obtaining module (100), and
the common FOV area (1210) is formed as a common area of a first capturing area captured by the barcode information obtaining module and a second capturing area captured by the image information obtaining module (200), and
**characterized in that**
the obtaining of the image information about the article comprises using the barcode information obtaining module (100) and the image information obtaining module (200), wherein the barcode information obtaining module (100) and the image information obtaining module (200) are included in one system-on-chip, SoC, to be simultaneously triggered by one signal to have synchronized photographing time points.

9. The method of claim 8, wherein the obtaining of the image information of the article comprises obtaining color information of the article by using the barcode information obtaining module (100), which is a monochrome sensor, and the image information obtaining module (200), which is a color sensor.

10. The method of claim 9, wherein the monitoring of the article comprises generating article status information by inserting the barcode information of the article into a metadata area related to the color information of the article and mapping the barcode information of the article with the color information of the article based on the article status information.

11. The method of claim 10, wherein the monitoring of the article comprises checking a status of the article or a position of the article based on the barcode information of the article and the color information of the article.

## Patentansprüche

1. Kamera (1000), die in einem Logistiksteuerungssystem (1) enthalten ist, wobei die Kamera (1000) Folgendes umfasst:
ein Barcodeinformationserfassungsmodul (100), das dazu konfiguriert ist, ein Bild eines Barcodes eines Artikels, der an dem Artikel angebracht ist, aufzunehmen und Barcodeinformationen des Barcodes zu erfassen;
ein Bildinformationserfassungsmodul (200), das als ein Gehäuse mit dem Barcodeinformationserfassungsmodul (100) konfiguriert ist und so konfiguriert ist, dass es Bildinformationen des Artikels durch Aufnehmen eines Bildes des Artikels erfasst und gleichzeitig durch ein Signal ausgelöst wird, um einen synchronisierten Aufnahmezeitpunkt mit dem Barcodeinformationserfassungsmodul (100) zu haben; und
einen Prozessor (340, 1300), der dazu konfiguriert ist, den Artikel auf der Grundlage der Barcodeinformationen und der Bildinformationen zu überwachen, wobei das Barcodeinformationserfassungsmodul (100) und das Bildinformationserfassungsmodul (200) den Artikel in einem gemeinsamen Sichtfeld (FOV)-Bereich erfassen, wobei der gemeinsame FOV-Bereich (1210) als gemeinsamer Bereich eines ersten Erfassungsbereichs, der vom Barcodeinformationserfassungsmodul (100) erfasst wird, und eines zweiten Erfassungsbereichs, der vom Bildinformationserfassungsmodul (200) erfasst wird, ausgebildet ist, und
**dadurch gekennzeichnet, dass**
das Barcodeinformationserfassungsmodul (200) und das Bildinformationserfassungsmodul (100) in einem System-on-Chip (kurz: SoC) enthalten sind, um gleichzeitig durch ein Signal ausgelöst zu werden, um synchronisierte Aufnahmezeitpunkte zu haben.

2. Kamera (1000) nach Anspruch 1, wobei das Barcodeinformationserfassungsmodul (100) eine Flüssiglinse umfasst.

3. Kamera (1000) nach Anspruch 1, wobei eine horizontale oder vertikale Breite des gemeinsamen FOV-Bereichs (1210) gleich oder größer als eine Breite eines Förderbands ist.

4. Kamera (1000) nach Anspruch 1, wobei das Barcodeinformationserfassungsmodul (100) einen Monochrom-Sensor umfasst, das Bildinformationserfassungsmodul (200) einen Farbsensor umfasst und das Bildinformationserfassungsmodul (200) Farbinformationen des Artikels erfasst.

5. Kamera (1000) nach Anspruch 4,
wobei der Prozessor (340, 1300) ferner dazu konfiguriert ist, Artikelzustandsinformationen zu erzeugen, indem er die Barcodeinformationen des Artikels in einen Metadatenbereich einfügt, der sich auf die Farbinformationen des Artikels bezieht, und die Barcodeinformationen des Artikels auf der Grundlage der Artikelzustandsinformationen den Farbinformationen des Artikels zuzuordnen.

6. Kamera (1000) nach Anspruch 5, wobei der Prozessor (340, 1300) ferner dazu konfiguriert ist, einen Zustand des Artikels oder eine Position des Artikels auf der Grundlage der Barcodeinformationen des Artikels und der Farbinformationen des Artikels zu überprüfen.

7. Kamera (1000) nach Anspruch 1, umfassend ferner eine Leuchtdiode (LED), die an einer Seite des Gehäuses angeordnet ist.

8. Verfahren zum Steuern einer Kamera (1000), die in einem Logistiksteuerungssystem (1) enthalten ist, wobei das Verfahren Folgendes umfasst:
Erfassen von Barcodeinformationen eines Artikels unter Verwendung eines Barcodeinformationserfassungsmoduls (100), das ein Bild eines Barcodes des Artikels, der an dem Artikel angebracht ist, aufnimmt, und Erfassen von Bildinformationen über den Artikel unter Verwendung eines Bildinformationserfassungsmoduls (200), das als ein Gehäuse mit dem Barcodeinformationserfassungsmodul (100) konfiguriert ist und gleichzeitig durch ein Signal ausgelöst wird, um einen synchronisierten Aufnahmezeitpunkt mit dem Barcodeinformationserfassungsmodul (100) zu haben; und
Überwachen des Artikels auf der Grundlage der Barcodeinformationen und der Bildinformationen, wobei das Erfassen der Bildinformationen über den Artikel das Aufnehmen von Bildern von Artikeln in einem gemeinsamen Sichtfeld (FOV)-Bereich (1210) unter Verwendung des Barcodeinformationserfassungsmoduls (100) und des Bildinformationserfassungsmoduls (100) umfasst, und
der gemeinsame FOV-Bereich (1210) als gemeinsamer Bereich eines ersten Erfassungsbereichs, der vom Barcodeinformationserfassungsmodul erfasst wird, und eines zweiten Erfassungsbereichs, der vom Bildinformationserfassungsmodul (200) erfasst wird, ausgebildet ist, und
**dadurch gekennzeichnet, dass**
das Erfassen der Bildinformationen über den Artikel die Verwendung des Barcodeinformationserfassungsmoduls (100) und des Bildinformationserfassungsmoduls (200) umfasst, wobei das Barcodeinformationserfassungsmodul (100) und das Bildinformationserfassungsmodul (200) in einem System-on-Chip (kurz: SoC) enthalten sind, um gleichzeitig durch ein Signal ausgelöst zu werden, um synchronisierte Aufnahmezeitpunkte zu haben.

9. Verfahren nach Anspruch 8, wobei das Erfassen der Bildinformationen des Artikels das Erfassen von Farbinformationen des Artikels unter Verwendung des Barcodeinformationserfassungsmoduls (100), das ein Monochrom-Sensor ist, und des Bildinformationserfassungsmoduls (200), das ein Farbsensor ist, umfasst.

10. Verfahren nach Anspruch 9, wobei das Überwachen des Artikels das Erzeugen von Artikelzustandsinformationen, indem die Barcodeinformationen des Artikels in einen Metadatenbereich eingefügt werden, der sich auf die Farbinformationen des Artikels bezieht, und das Zuordnen der Barcodeinformationen des Artikels zu den Farbinformationen des Artikels auf der Grundlage der Artikelzustandsinformationen umfasst.

11. Verfahren nach Anspruch 10, wobei das Überwachen des Artikels das Überprüfen eines Zustands des Artikels oder einer Position des Artikels auf der Grundlage der Barcodeinformationen des Artikels und der Farbinformationen des Artikels umfasst.

## Revendications

1. Caméra (1000) comprise dans un système de commande logistique (1), la caméra (1000) comprenant :
un module d'obtention d'informations de code-barre (100) configuré pour capturer une image d'un code-barre d'un article, qui est attaché à l'article, et obtenir des informations de code-barre du code-barre ;
un module d'obtention d'informations d'image (200) configuré en tant qu'un boîtier avec le module d'obtention d'informations de code-barre (100) et configuré pour obtenir des informations d'image de l'article en capturant une image de l'article et être simultanément déclenché par un signal afin d'avoir un point temporel de photographie synchronisé avec un module d'obtention d'informations de code-barre (100) ; et
un processeur (340, 1300) configuré pour contrôler l'article sur la base des informations de code-barre et des informations d'image, dans lequel le module d'obtention d'informations de code-barre (100) et le module d'obtention d'informations d'image (200) capturent l'article dans une zone de champ de vision commune, FOV (1210), la zone FOV commune (1210) est formée comme une zone commune d'une première zone de capture capturée par le module d'obtention d'informations de code-barre (100) et d'une seconde zone de capture capturée par le module d'obtention d'informations d'image (200), et
**caractérisée en ce que**
le module d'obtention d'informations de code-barre (200) et le module d'obtention d'informations d'image (100) sont inclus dans un système sur puce unique, SoC, afin d'être déclenchés simultanément par un signal unique pour avoir des points temporels de photographie synchronisés.

2. Caméra (1000) selon la revendication 1, dans laquelle le module d'obtention d'informations de code-barre (100) comprend une lentille liquide.

3. Caméra (1000) selon la revendication 1, dans laquelle une largeur horizontale ou verticale de la zone FOV commune (1210) est égale ou supérieure à une largeur d'une bande transporteuse.

4. Caméra (1000) selon la revendication 1, dans laquelle le module d'obtention d'informations de code-barre (100) comprend un capteur monochrome, le module d'obtention d'informations d'image (200) comprend un capteur couleur, et le module d'obtention d'informations d'image (200) obtient des informations de couleur de l'article.

5. Caméra (1000) selon la revendication 4,
dans lequel le processeur (340, 1300) est en outre configuré pour générer des informations d'état de l'article en insérant les informations de code-barre de l'article dans une zone de métadonnées associée aux informations de couleur de l'article, et pour associer les informations de code-barre de l'article aux informations de couleur de l'article sur la base des informations d'état de l'article.

6. Caméra (1000) selon la revendication 5, dans laquelle le processeur (340, 1300) est en outre configuré pour vérifier un état de l'article ou une position de l'article sur la base des informations de code-barre de l'article et des informations de couleur de l'article.

7. Caméra (1000) selon la revendication 1, comprenant en outre une diode électroluminescente (LED) agencée sur un côté du boîtier.

8. Procédé pour commander une caméra (1000) comprise dans un système de commande logistique (1), le procédé comprenant :
obtenir des informations de code-barre d'un article en utilisant un module d'obtention d'informations de code-barre (100) qui capture une image d'un code-barre de l'article, lequel est attaché à l'article, et obtenir des informations d'image concernant l'article en utilisant un module d'obtention d'informations d'image (200) qui est configuré en tant qu'un boîtier avec le module d'obtention d'informations de code-barre (100) et déclenché simultanément par un signal unique afin d'avoir un point temporel de photographie synchronisé avec le module d'obtention d'informations de code-barre (100) ; et
contrôler l'article sur la base des informations de code-barre et des informations d'image, dans lequel l'obtention des informations d'image concernant l'article comprend la capture d'images d'articles dans une zone de champ de vision commune, FOV, (1210) en utilisant le module d'obtention d'informations de code-barre (100) et le module d'obtention d'informations d'image (100), et
la zone FOV commune (1210) est formée comme une zone commune d'une première zone de capture capturée par le module d'obtention d'informations de code-barre et d'une seconde zone de capture capturée par le module d'obtention d'informations d'image (200), et
**caractérisé en ce que**
l'obtention des informations d'image concernant l'article consiste à utiliser le module d'obtention d'informations de code-barre (100) et le module d'obtention d'informations d'image (200), dans lequel le module d'obtention d'informations de code-barre (100) et le module d'obtention d'informations d'image (200) sont inclus dans un système sur puce unique, SoC, afin d'être déclenchés simultanément par un signal unique pour avoir des points temporels de photographie synchronisés.

9. Procédé selon la revendication 8, dans lequel l'obtention des informations d'image de l'article consiste à obtenir des informations de couleur de l'article en utilisant le module d'obtention d'informations de code-barre (100), qui est un capteur monochrome, et le module d'obtention d'informations d'image (200), qui est un capteur couleur.

10. Procédé selon la revendication 9, dans lequel le contrôle de l'article consiste à générer des informations d'état de l'article en insérant les informations de code-barre de l'article dans une zone de métadonnées associée aux informations de couleur de l'article et l'association des informations de code-barre de l'article aux informations de couleur de l'article sur la base des informations d'état de l'article.

11. Procédé selon la revendication 10, dans lequel le contrôle de l'article consiste à vérifier un état de l'article ou une position de l'article sur la base des informations de code-barre de l'article et des informations de couleur de l'article.
